# EUROPÄISCHE PATENTSCHRIFT

(11) **EP 2 303 495 B1**
(45) Veröffentlichungstag und Bekanntmachung des Hinweises auf die Patenterteilung: **18.02.2015**
(21) Anmeldenummer: 09777330.3
(22) Anmeldetag: 21.07.2009
(51) Int. Cl.: B23D 45/04, B23D 47/02

(54) **KAPP- UND GEHRUNGSSÄGE**
CIRCULAR AND MITER BOX SAW
SCIE À ONGLET

(30) Priorität: 22.07.2008 DE 102008034273; 12.09.2008 DE 202008012213 U
(43) Veröffentlichungstag der Anmeldung: 06.04.2011
(73) Patentinhaber: Weusthof, Gerhard, 48480 Schapen (DE)
(72) Erfinder: Weusthof, Gerhard, 48480 Schapen (DE)
(74) Vertreter: Hübsch, Dirk
(86) Internationale Anmeldenummer: PCT/EP2009/005281
(87) Internationale Veröffentlichungsnummer: WO 2010/009861

(56) Entgegenhaltungen:
- EP-A1- 0 379 322
- EP-A1- 1 405 703
- DE-U1- 20 313 885
- DE-U1-202006 012 418
- GB-A- 2 446 317
- US-A- 5 870 939

## Beschreibung

Die Erfindung betrifft eine Kapp- und Gehrungssäge mit einem Auflagetisch, mit einem relativ zum Auflagetisch um eine Schwenkachse schwenkbaren Lagermittel, mit einer Bodenplatte, wobei auf der Bodenplatte das Lagermittel schwenkbar abgestützt ist, und mit einem um die Schwenkachse schwenkbaren Gehrungsarm sowie einer am Gehrungsarm, vzw. oberhalb des Auflagetisches angeordneten Sägevorrichtung, wobei die Sägevorrichtung mittels einer Gleitführungsvorrichtung verschiebbar ist.

Mit einer Kapp- und Gehrungssäge können Werkstücke aus zum Beispiel Metall, Holz, Kunststoff oder dgl. unter einem einstellbaren Winkel zugeschnitten werden. Insbesondere lassen sich mit Kapp- und Gehrungssägen Werkstückstangen in einem vom rechten Winkel abweichenden Winkel - dem Gehrungswinkel - zuschneiden. Das Werkstück wird dabei auf einen Auflagetisch der Kapp- und Gehrungssäge gelegt. An einem Gehrungsarm ist oberhalb des Auflagetisches eine Sägevorrichtung mit rotierbarem Sägeblatt zum Sägen des Werkstückes angeordnet. Der Gehrungsarm ist vzw. über ein Lagermittel um eine Schwenkachse schwenkbar gelagert. Die Schwenkachse ist als eine Hochachse ausgebildet. Durch das Schwenken des Gehrungsarms ist der Gehrungswinkel einstellbar. Ferner ist vzw. der Gehrungsarm um eine Gehrungsachse schwenkbar, wobei sich die Gehrungsachse im wesentlichen senkrecht zur Schwenkachse erstreckt.

Nachdem der Gehrungswinkel eingestellt ist, kann das Werkstück mit der Sägevorrichtung gekappt bzw. durchgesägt werden, wozu die Sägevorrichtung nach unten - um eine Querachse - schwenkbar ist. Die Querachse steht dabei vzw. im wesentlichen senkrecht zur Schwenkachse und im wesentlichen senkrecht zur Gehrungsachse. Die Sägevorrichtung ist hier relativ zur Schwenkachse in Radialrichtung mit einer Gleitführungsvorrichtung verschiebbar ausgestaltet, so dass nachdem die Sägevorrichtung auf die Höhe des Werkstücks abgesenkt ist, das Werkstück durch radiales Verschieben in Richtung auf die Schwenkachse, vzw. entlang der Gehrungsachse durchschnitten werden kann.

Aus der DE 203 13 885 U1 ist eine Kapp- und Gehrungssäge bekannt. Eine ähnliche Kapp- und Gehrungssäge ist auch aus der DE 20 2006 912418 U1 bekannt. Ein drehfester, zweiteilig ausgebildeter Auflagetisch wird bei diesen Kapp- und Gehrungssägen durch an einer Grundplatte vorgesehene seitliche Auflageblöcke/Vorsprünge gebildet, wobei die Grundplatte zusätzlich einen Aufnahmeraum aufweist und im Aufnahmeraum ein als Drehteller ausgebildetes Lagermittel um eine Schwenkachse schwenkbar gelagert ist. Der Boden des Aufnahmeraums wird hier von einer Bodenplatte gebildet, auf der der Drehteller abgestützt ist. Der Drehteller dient hier als Lagermittel für den Gehrungsarm und die am Gehrungsarm angeordnete Sägevorrichtung. Die Oberseite des Drehtellers und die Oberseite des Auslagetisches liegen in etwa in einer Ebene. Der Drehteller trägt einen Auslegerarm, wobei der Auslegerarm einen bis zum Mittelpunkt des Drehtellers reichenden Schlitz aufweist. In den Schlitz kann ein Sägeblatt der elektrischen Sägevorrichtung eintauchen. Die Gleitführungsvorrichtung zum radialen Verschieben der Sägevorrichtung entlang der Gehrungsachse also auf die Schwenkachse zu bzw. von der Schwenkachse weg ist hier in Höhe der Sägevorrichtung am Gehrungsarm, also oberhalb des Drehtellers angebracht.

Aus der EP 0 379 322 B1 ist eine Gehrungssäge zum Schneiden eines auf einem Auflagetisch angeordneten Werkstücks bekannt. Der Auflagetisch weist einen in seiner Mitte ausgebildeten Aufnahmeraum auf. Ein als Drehtisch ausgebildetes Lagermittel ist in dem Aufnahmeraum drehbar gelagert. Links und rechts neben dem Drehtisch ist der zweiteilig ausgebildete Auflagetisch durch Vorsprünge gebildet, wobei die Oberseiten als Werkstückauflageflächen dienen. Der zwischen den Vorsprüngen angeordnete Drehtisch liegt mit seiner Oberseite in derselben Ebene wie die Werkstückauflageflächen der Vorsprünge. Der Drehtisch ist hier von oben in den Aufnahmeraum des Auflagetisches eingesetzt. Diese Gehrungssäge weist ferner eine Gleitführungsvorrichtung auf. Die Gleitführungsvorrichtung weist eine Gleitstange auf, die sich durch die Umfangungswand des Drehtisches hindurch, im wesentlichen in Durchmesserrichtung des Drehtisches erstreckt. Die Gleitstange ist in Durchmesserrichtung verschiebbar gelagert. An der Gleitstange ist ein Gehrungsarm mit der elektrischen Sägevorrichtung angeordnet, so dass die Sägevorrichtung mit Hilfe der Gleitführungsvorrichtung in Radialrichtung verschiebbar ist.

Schließlich wird in der US 5,870,939 A eine Kapp- und Gehrungssäge beschrieben, die eine Gleitführungsvorrichtung mit entsprechenden Gleitführungselementen aufweist. Hierbei sind die Gleitführungsführungselemente innerhalb des Lagermittels, nämlich in einem Lagermittelgehäuse vorgesehen, wobei das Lagermittel als Drehteller ausgebildet ist, nämlich drehbar auf einer Bodenplatte mit Hilfe einer Lagerschraube entsprechend gelagert ist. Hierbei ist das Lagermittel innerhalb einer Bodenplattenkonstruktion gelagert, wobei die Bodenplattenkonstruktion einen Aufnahmeraum für das Gleitführungselement aufweist. Zugleich bildet die obere Fläche dieser Bodenplattenkonstruktion den Auflagetisch.

Die im Stand der Technik bekannten Kapp- und Gehrungssägen sind noch nicht optimal ausgebildet. Insbesondere dadurch, dass hier ein Drehtisch in einem Aufnahmeraum drehbar gelagert ist, benötigen die bekannten Kapp- und Gehrungssägen einen großen Raumbedarf, sind daher nicht kompakt ausgebildet, was deren Transport und auch deren Anordnung, insbesondere auf Montage-Baustellen erschwert. Weiterhin bilden die Drehtische eine relativ große Auflagefläche für die Werkstücke. Die Praxis hat gezeigt, dass bei einer Verdrehung des Drehtisches auch das darauf aufliegende Werkstück teilweise mit verrutschen kann, so dass die Schnittqualität bei bekannten Kapp- und Gehrungssägen problematisch, d. h. nicht immer optimal ist, da aufgrund der sich mitdrehenden relativ großen Fläche des Drehtisches keine sichere Werkstückauflage vorhanden ist. Im Ergebnis sind daher die im Stand der Technik bekannten Kapp- und Gehrungssägen noch nicht optimal ausgebildet.

Der Erfindung liegt daher die Aufgabe zugrunde, eine Kapp- und Gehrungssäge derart auszugestalten und weiterzubilden, dass deren Schnittqualität erhöht ist, eine sichere Werkstückauflage bereitgestellt ist, sowie ein kompakter Aufbau realisiert ist.

Die zuvor aufgezeigte Aufgabe wird nun für die Kapp- und Gehrungssäge durch die Merkmale des Patentanspruches, 1 gelöst. Die Gleitführungsvorrichtung ist unterhalb der Bodenplatte vorgesehen bzw. angeordnet, um zunächst einen tiefen Schwerpunkt der Kapp- und Gehrungssäge zu erreichen, wodurch sich zunächst der Gehrungsarm sicher und ruhig führen lässt. Vzw. ist die Sägevorrichtung, insbesondere mit dem Gehrungsarm, um eine Gehrungsachse zusätzlich schwenkbar, wobei die Gehrungsachse im wesentlichen senkrecht zur Schwenkachse steht und sich parallel zur Bewegungsrichtung der Gleitführungsvorrichtung erstreckt. Dadurch, dass die Gleitführungsvorrichtung nun unterhalb der Bodenplatte angeordnet ist, ist insbesondere die Gleitführungsvorrichtung auch nicht um die Gehrungsachse schwenkbar ausgebildet. Vzw. ist nur der Gehrungsarm mit der Sägevorrichtung um die Gehrungsachse schwenkbar ausgebildet, wobei die unterhalb der Gehrungsachse angeordnete Gleitführungsvorrichtung nicht um die Gehrungsachse geschwenkt wird, wodurch die Verwindungssteifigkeit der Kapp- und Gehrungssäge während des Schneid-/Sägevorganges erhöht ist. Durch diese Anordnung kann nun eine präzise arbeitende Gleitführungsvorrichtung bereitgestellt werden, was beim Schneiden die Schnittqualität stark erhöht. Die Gleitführung ist unterhalb des Lagermittels und unterhalb der Bodenplatte angeordnet. Dadurch, dass nun das Lagermittel, die Bodenplatte und die Gleitführungsvorrichtung als getrennte Baugruppen ausgebildet sind, die vzw. in einer Art "Sandwich-Bauweise" sequentiell übereinander angeordnet sind, kann der ortsfeste Auflagetisch sich im wesentlichen bis zur Schwenkachse erstrecken und das Lagermittel zusätzlich noch zumindest teilweise überdecken. Dadurch ist nun die drehfeste Werkstückauflagefläche vergrößert. Beim Einstellen der jeweiligen Schwenkstellung um die Schwenkachse hat das Werkstück daher einen großflächigen Kontakt mit dem drehfesten Auflagetisch, was eine sichere Auflage des Werkstücks insbesondere beim Einstellen der Schwenkstellung um die Schwenkachse ermöglicht. Insbesondere aber durch die getrennte Baugruppenweise in "Sandwich-Bauart", durch den Auflagetisch, der zumindest teilweise das Lagermittel überdeckt, durch die hierunter dann angeordnete Bodenplatte und durch die hierunter wiederum angeordnete Gleitführungsvorrichtung wird eine sehr kompakt ausgebildete Kapp- und Gehrungssäge realisiert, die nur wenig Raumbedarf benötigt, insbesondere gut transportierbar ist und auch gut bei einer "Montage-Baustelle" immer platzsparend aufgestellt werden kann. Die eingangs beschriebenen Nachteilte sind daher vermieden und entsprechende Vorteile sind erzielt.

Es gibt nun eine Vielzahl von Möglichkeiten, die erfindungsgemäße Kapp- und Gehrungssäge in vorteilhafter Art und Weise auszugestalten und weiterzubilden. Hierfür darf zunächst auf die dem Patentanspruch 1 nachgeordneten Patentansprüche verwiesen werden. Im folgenden wird nun eine bevorzugte Ausgestaltung der Erfindung anhand der Zeichnung und der dazugehörigen Beschreibung näher erläutert. In der Zeichnung zeigt:
- Fig. 1: in einer schematischen, perspektivischen Darstellung eine Kapp- und Gehrungssäge von schräg oben vorne,
- Fig. 2: in einer schematischen, perspektivischen Darstellung die Kapp- und Gehrungssäge aus Fig. 1 von schräg oben hinten,
- Fig. 3: in einer schematischen, perspektivischen Darstellung die Kapp- und Gehrungssäge aus Fig. 1 und 2 ebenfalls von schräg oben hinten,
- Fig. 4: in einer schematischen, perspektivischen Darstellung die Kapp- und Gehrungssäge aus den Fig. 1 bis 3 von schräg unten hinten,
- Fig. 5: in einer schematischen, perspektivischen Darstellung die Kapp- und Gehrungssäge aus den Fig. 1 bis 4 ebenfalls von unten hinten,
- Fig. 6: in einer schematischen Seitenansicht die Kapp- und Gehrungssäge aus den Fig. 1 bis 5,
- Fig. 7: in einer schematischen, teilweise geschnittenen Seitenansicht die Kapp- und Gehrungssäge aus den Fig. 1 bis 6,
- Fig. 8: in einer schematischen Frontansicht die Kapp- und Gehrungssäge aus den Fig. 1 bis 7,
- Fig. 9: in einer schematischen Rückansicht die Kapp- und Gehrungssäge aus den Fig. 1 bis 8, und
- Fig. 10: in einer schematischen Darstellung eine Explosionsdarstellung der wesentlichen Komponenten der erfindungsgemäßen Kappund Gehrungssäge.

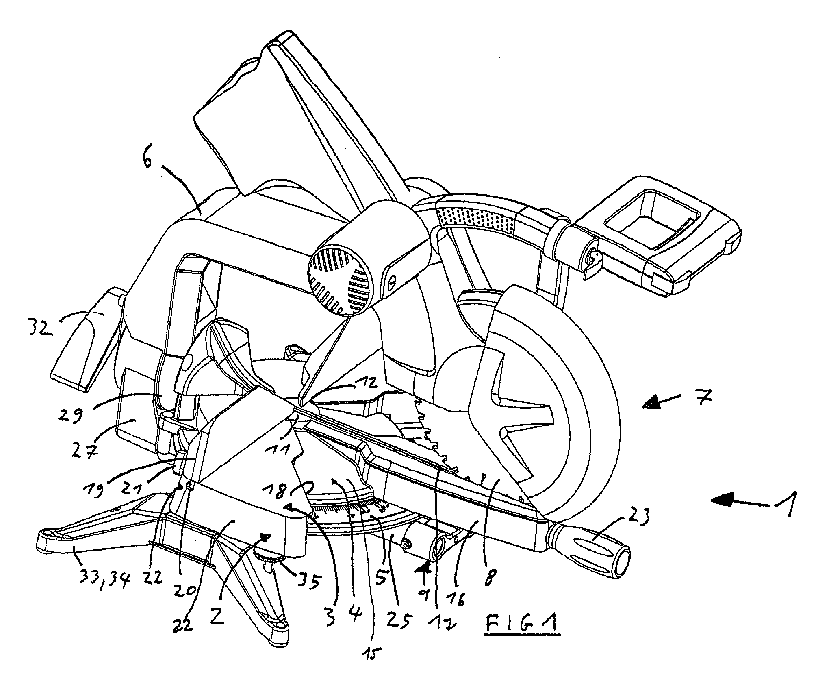

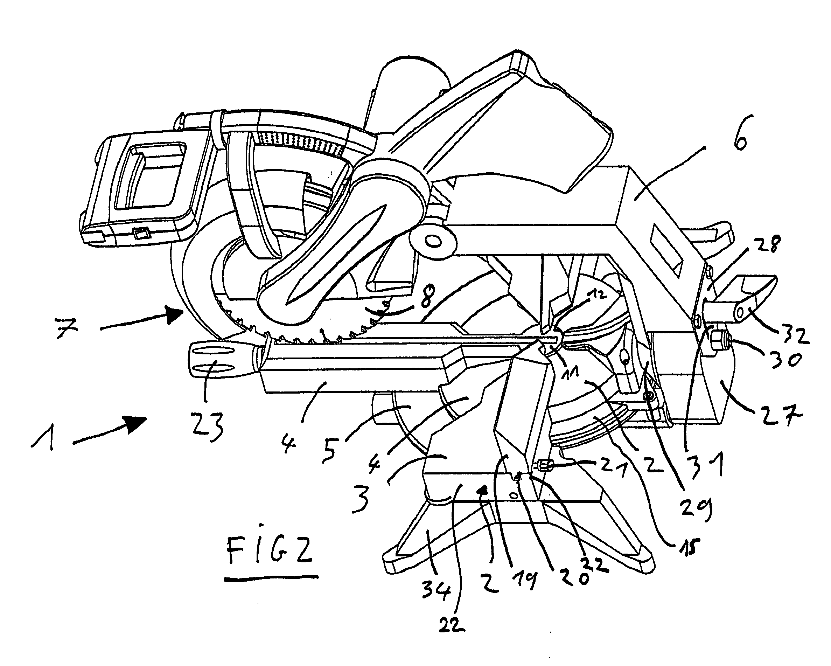

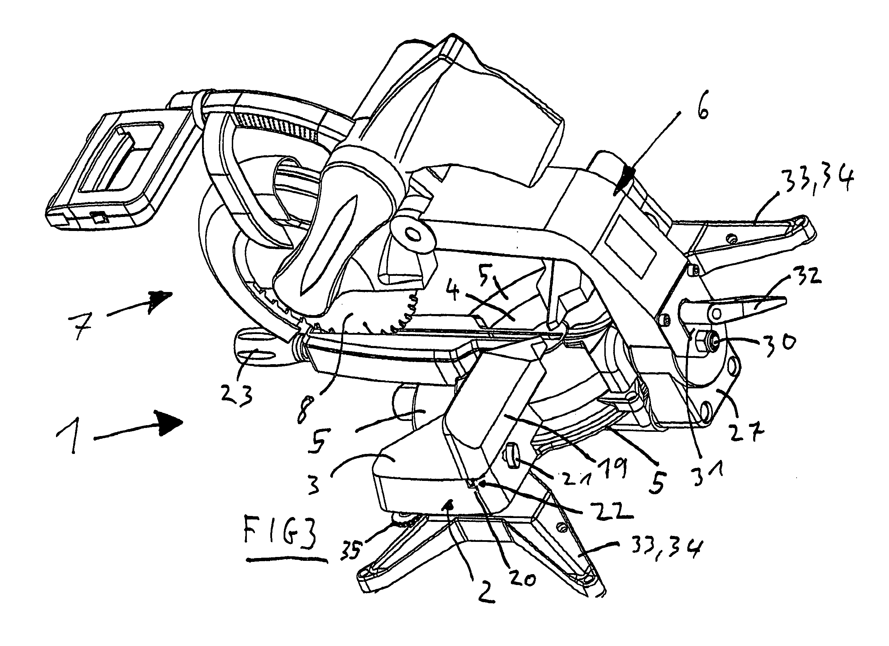

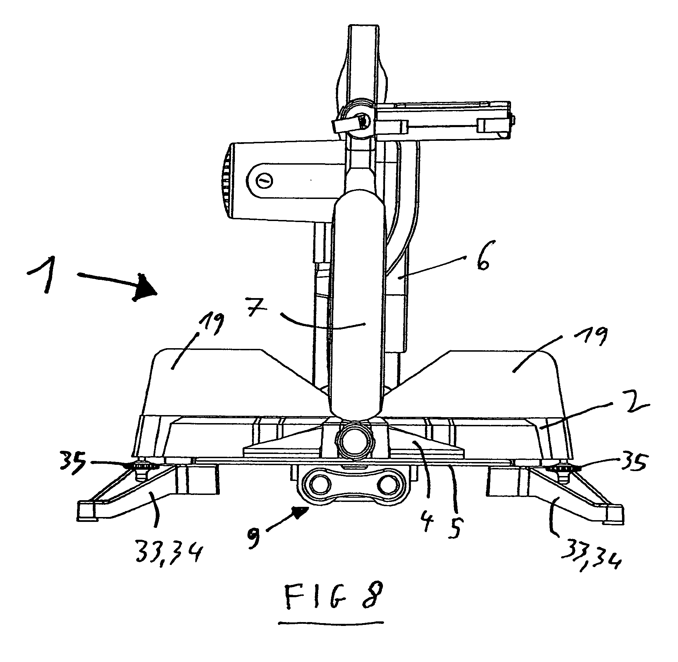

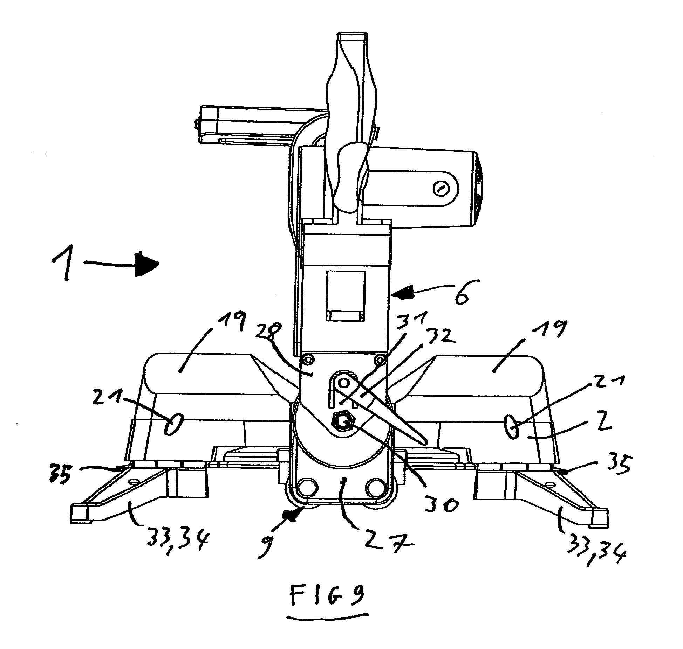

In den Fig. 1 bis 10 ist eine Kapp- und Gehrungssäge 1 in verschiedenen schematischen Darstellungen bzw. deren wesentliche Komponenten gut zu erkennen.

Mit der Kapp- und Gehrungssäge 1 können insbesondere Leisten, Paneele oder Platten auf die gewünschte Länge, vzw. einschließlich der gewünschten Gehrungsschnitte geschnitten werden. Wie im folgenden noch ausführlich beschrieben wird, kann mit der Kapp- und Gehrungssäge 1 daher nicht nur ein Schnitt rechtwinklig zur Längsachse des nicht dargestellten Werkstücks durchgeführt werden, sondern auch sogenannte Gehrungsschnitte in einem spitzen Winkel zur Längsachse des Werkstücks. Die Kapp- und Gehrungssäge 1 ist vzw. transportabel ausgebildet. Die Größe und das Gewicht der Kapp- und Gehrungssäge 1 ist vzw. derart bemessen, dass diese von einem Benutzer, bspw. einem Handwerker, auch in einem Kofferraum eines Kraftfahrzeuges transportiert werden kann.

Die Kapp- und Gehrungssäge 1 weist zunächst einen Auflagetisch 2 auf. Der Auflagetisch 2, weist dabei eine Oberseite 3 auf, wobei die Oberseite 3 zur Auflage des nicht dargestellten Werkstücks dient.

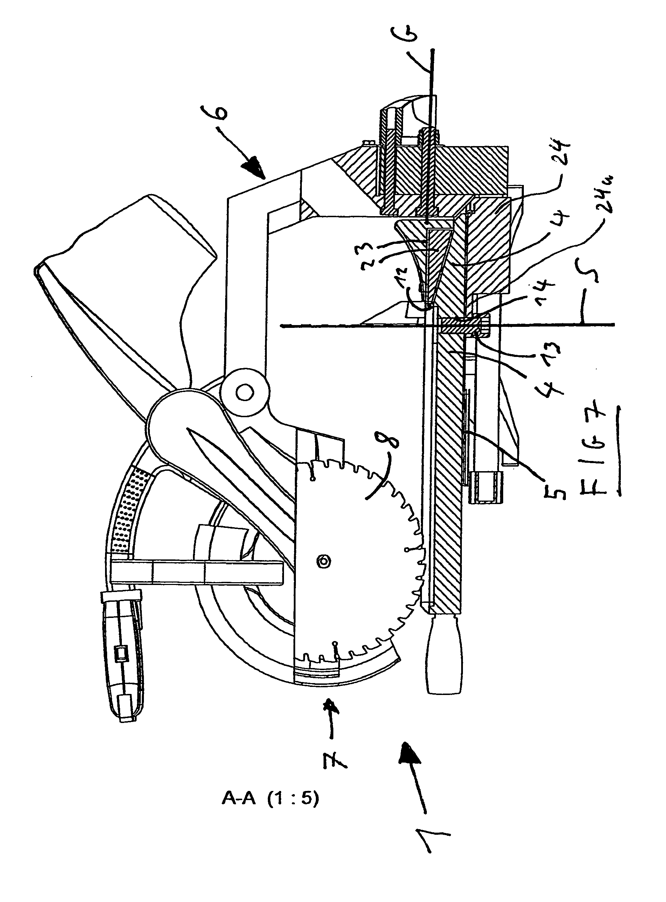

Die Kapp- und Gehrungssäge 1 weist weiterhin ein relativ zum Auflagetisch 2 um eine Schwenkachse S schwenkbares Lagermittel 4 auf (vgl. auch Fig. 7). Das Lagermittel 4 ist vzw. auf einer Bodenplatte 5 angeordnet. Die Bodenplatte 5 bildet daher ein Abstützelement für das Lagermittel 4 und ist daher auch als "Abstützplatte" bezeichenbar. Auf der Bodenplatte 5 ist das Lagermittel 4 um die Schwenkachse S schwenkbar abgestützt.

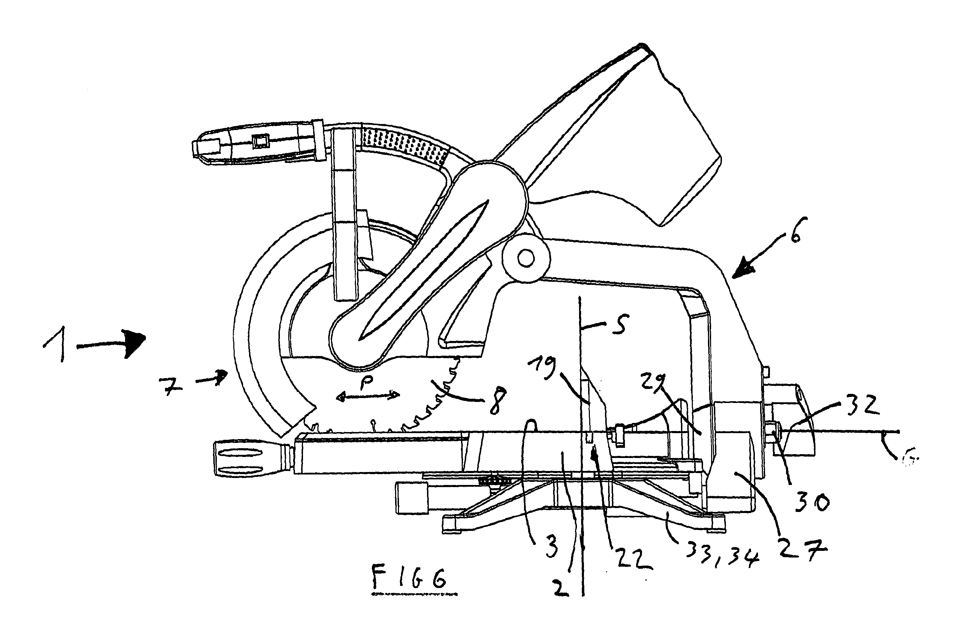

Mit dem Lagermittel 4 ist funktional wirksam ein Gehrungsarm 6 verbunden, was im folgenden noch ausführlicher erläutert wird. Der Gehrungsarm 6 ist daher zusammen mit dem Lagermittel 4 um die Schwenkachse S schwenkbar. Am Gehrungsarm 6 ist eine Sägevorrichtung 7 angeordnet. Die Sägevorrichtung 7 ist dabei vzw. oberhalb des Auflagetisches 2 angeordnet. Die Sägevorrichtung 7 ist zum Kappen des nicht dargestellten Werkstücks vzw. nach unten verschwenkbar ausgebildet und kann danach wieder in die Ausgangslage nach oben geschwenkt werden. Die Sägevorrichtung 7 weist ein Sägeblatt 8, vzw. ein Kreissägeblatt, auf, das vzw. motorisch antreibbar ist. Die Sägevorrichtung 7 ist an einem Ende des Gehrungsarms an einer nicht näher bezeichneten Querachse nach oben und/oder nach unten schwenkbar gelagert. Die Sägevorrichtung 7 ist ferner in "Radialrichtung", parallel zu einer Gehrungsachse G, mittels einer Gleitführungsvorrichtung 9 verschiebbar, insbesondere daher in Richtung auf die Schwenkachse S oder von dieser weg verschiebbar wie insbesondere in Fig. 6 durch die Pfeile P dargestellt. Durch die Gleitführungsvorrichtung 9 ist die Länge des Sägeschnittes nicht auf den Durchmesser des Sägeblatts 8 beschränkt, sondern um den möglichen Verschiebeweg der Sägevorrichtung 7 mittels der Gleitführungsvorrichtung 9 erweitert. Die Länge des Sägeschnitts ergibt sich daher vzw. aus der Zuglänge und dem Durchmesser des Sägeblattes 8.

Die Gleitführungsvorrichtung 9 ist im wesentlichen unterhalb der Bodenplatte 5 vorgesehen. Dies hat den Vorteil, dass einerseits die Gleitführungsvorrichtung 9 nicht um die Gehrungsachse G schwenkbar gelagert sein muss und andererseits der Schwerpunkt der Gleitführungsvorrichtung 9 sich nahe der Schnittebene erstreckt, was eine präzise und verwindungssteife Verschiebung und/oder Schwenkbarkeit der Sägevorrichtung 7 ermöglicht. Insbesondere ist aufgrund der "Sandwich-Bauweise", nämlich der sequentiellen Anordnung (von oben nach unten betrachtet) des Lagermittels 4, der Bodenplatte 5 und der Gleitführungsvorrichtung 9 eine sehr kompakte Kapp- und Gehrungssäge 1 realisiert, die einerseits bspw. von Monteuren platzsparend gut im Kraftfahrzeug transportierbar und auch am Montageort gut platzsparend aufstellbar ist.

Das Lagermittel 4 ist hier im Bereich zwischen dem Auflagetisch 2, nämlich vzw. im Bereich zwischen den Vorsprüngen 22 und der Bodenplatte 5 angeordnet. Die Bodenplatte 5 und der Auflagetisch 2 bzw. die Vorsprünge 22 sind in der vorliegenden Ausgestaltung miteinander verschraubt. Vzw. bilden der Auflagetisch 2, der im wesentlichen durch die beiden vorgesehenen Vorsprünge 22 gebildet wird, und die Bodenplatte 5 eine stabile Baugruppe. Die Montage der Bodenplatte 5 und des Lagermittels 4 erfolgt hier vzw. von unten. Zuerst wird das Lagermittel 4 in den umgedrehten Auflagetisch 2 eingesetzt und danach die Bodenplatte 5 aufgesetzt und mit der Unterseite des Auflagetisches 2 wirksam verbunden. Anschließend wird vzw. die Gleitführungsvorrichtung 9 montiert.

Der Auflagetisch 2 und die Bodenplatte 5 können in anderer Ausgestaltung nicht als separate Teile, sondern auch als integral ausgebildete Baueinheit ausgebildet sein. Ferner kann der Auflagetisch 2 und die Bodenplatte 5 jeweils ein oder mehrteilig aufgebaut sein. Die Bodenplatte 5 ist vzw. scheibenförmig ausgebildet. Die Bodenplatte 5 weist vzw. eine Winkelskala auf. In Fig. 1 ist gut zu erkennen, dass die Bodenplatte 5 über das Lagermittel 4 mit einem nicht näher bezeichneten Rand übersteht und dieser Rand die nicht näher bezeichnete Winkelskala zum Einstellen der Schwenkstellung um die Schwenkachse S aufweist.

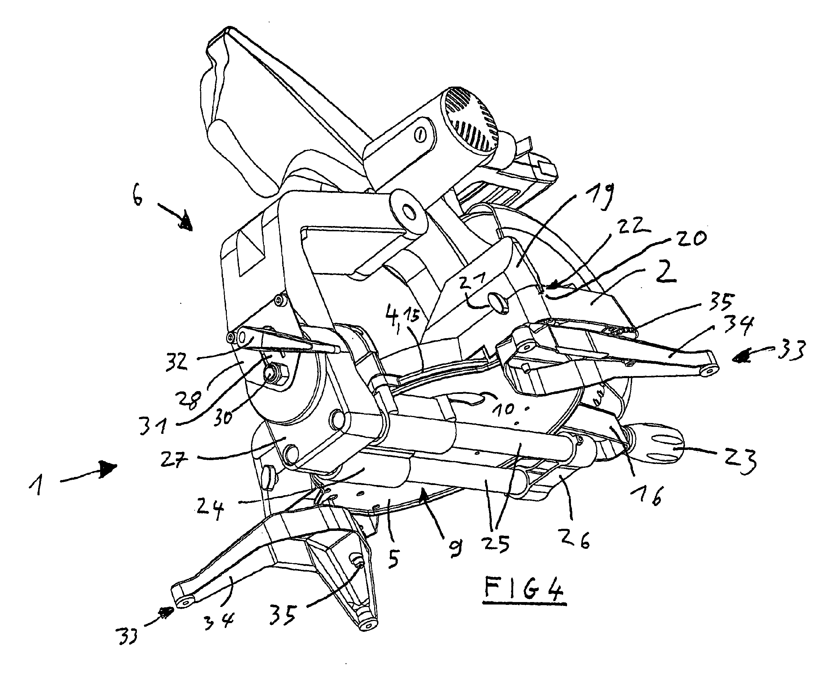

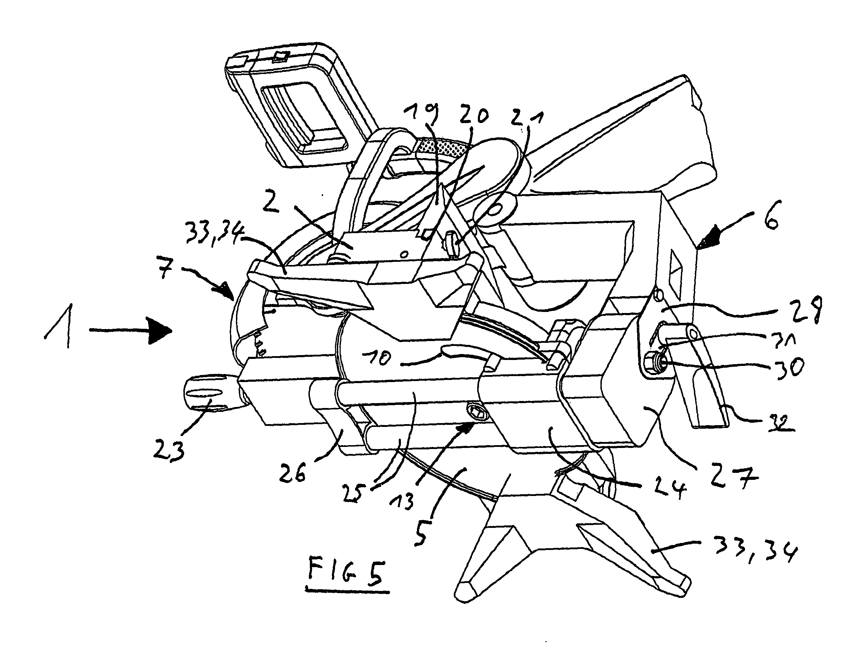

Die Bodenplatte 5 weist vzw. eine bogenförmige Führungsnut 10 auf (vgl. Fig. 4, 5). Die Führungsnut 10 ist konzentrisch zur Schwenkachse S angeordnet. Die Gleitführungsvorrichtung 9 und das Lagermittel 4 sind vzw. mit mindestens einem durch die Führungsnut 10 reichenden Führungselement, vzw. einem Bolzen oder einer Schraube (hier nicht im Einzelnen dargestellt) miteinander verbunden. Insbesondere können zwei oder mehr Bolzen durch die Führungsnut 10 reichen und das Lagermittel 4 und die Gleitführungsvorrichtung 9 miteinander verbinden. Zur Lagerung weist das Lagermittel 4 im Bereich der Schwenkachse S vzw. einen zumindest teilzylindrischen Lagervorsprung 11 auf. Der Auflagetisch 2 weist im Bereich der Schwenkachse S eine dazu passende zumindest teilzylindrische Öffnung 12 auf, wobei der Lagervorsprung 11 in die Öffnung 12 eingreift. Die teilzylindrische Öffnung 12 dient daher als Lagerdruckpunkt beim Schwenken um die Schwenkachse S.

Im Bereich der Schwenkachse S ragt durch die Bodenplatte 5 vzw. eine Schraube 13, wie es insbesondere in Fig. 7 dargestellt ist, um das Lagermittel 4 um die Schwenkachse S schwenkbar an der Bodenplatte 5 zu lagern. Das Lagermittel 4 weist eine entsprechende Aufnahme 14 auf, wobei die Schraube 13 in die Aufnahme 14 eingreift.

Wie die Figuren weiter zeigen, weist die Gleitführungsvorrichtung 9 eine vzw. blockartig ausgebildete Gleitführung 24 auf, die - wie Fig. 7 zeigt - einen plattenähnlichen Vorsprung 24a aufweist. Mit Hilfe des plattenförmigen Vorsprunges 24a lässt sich nun die Gleitführung 24 über die Schraube 13, mit der Aufnahme 14 des Lagermittels 4 fest verbinden. Hierdurch ist nun das Lagermittel 4 mit der Gleitführung 24 derart vzw. drehfest verbunden, so dass bei einer Schwenkbewegung des Lagermittels 4 auch die Gleitführung 24 diese Schwenkbewegung mitmacht, da die Schraube 13 sich durch eine nicht näher bezeichnete Lageröffnung der Bodenplatte 5 erstreckt. Auch eine andere Art der Lagerung bspw. über einen Bolzen ist denkbar.

In Fig. 7 ist ferner gut zu erkennen, dass der Auflagetisch 2 das Lagermittel 4 zumindest teilweise überdeckt. Die nicht näher bezeichnete Oberseite des Lagermittels 4 erstreckt sich dabei vzw. teilweise unterhalb der Oberseite 3 des Auflagetisches 2. Dadurch ist eine große Werkstückauflagefläche bereitgestellt, wobei diese Werkstückauflagefläche drehfest zum Werkstück angeordnet ist, auch wenn das Lagermittel 4 um die Schwenkachse S geschwenkt wird.

Das Lagermittel 4 weist vzw. einen Drehteller 15 und einen Ausleger 16 auf. Der Ausleger 16 weist einen sich in Radialrichtung des Drehtellers 15 erstreckenden Schlitz 17 auf, wobei die Sägevorrichtung 7 mit dem Sägeblatt 8 in den Schlitz 17 eintauchen kann. Der Schlitz 17 kann auch in einer auf dem Ausleger anordenbaren Leistenelement ausgebildet sein. Der Drehteller 15 ist hierbei über die sich durch die Durchgangsöffnung der Bodenplatte 5 hindurchstreckende Schraube 13 drehbar gelagert, wobei die Schraube 13 innerhalb der Aufnahme 14 festgeschraubt ist, so dass das Lagermittel 4 mit der Gleitführung 24 gekoppelt ist. Der Drehteller 15 und der Ausleger 16 sind vzw. als integrale Baugruppe vzw. einstückig ausgebildet. Der Drehteller 15 ist im Bereich der Schwenkachse S dicker ausgebildet als an seinem Rand, wodurch der Ausleger 16 zum Umfang des Drehtellers 15 hin über den Drehteller 15 aufragt.

Der Auflagetisch 2 weist eine im wesentlichen V-förmige Aussparung 18 auf, wobei der Ausleger 16 innerhalb der Aussparung 18 schwenkbar ist. Die Aussparung 18 des Auflagetisches 2 bildet hier zu jeder Seite einen Anschlag (nicht näher bezeichnet) für den Ausleger 16. Vzw. ist das Lagermittel 4 von +45 °bis-45° schwenkbar. Die Aussparung 18 hat daher vzw. einen Öffnungswinkel von mindestens 90°. Die Schwenkbewegung des Auslegers 16 zusammen mit dem Drehteller 15 ist durch die Aussparung 18 begrenzt.

Am Auflagetisch 2 sind vzw. zwei aufragende, fluchtend zueinander ausgerichtete Anschlagleisten 19 zum Anlegen des Werkstücks angeordnet. Die Anschlagleisten 19 erstrecken sich dabei vzw. im wesentlichen bis zur Schwenkachse S. Die Anschlagleisten 19 können sich dabei im wesentlichen bis zur vzw. teilzylindrischen Öffnung 12 bzw. bis zum Lagervorsprung 11 oder knapp über den Lagervorsprung 11 hinaus erstrecken. In der hier dargestellten Ausgestaltung weist der Auflagetisch 19 jeweils eine Nut 20 auf, in die die Anschlagleisten 19 mit einem nicht näher bezeichneten länglichen Vorsprung eingreifen. Die stabile Baugruppe aus dem Auflagetisch 2 und der Bodenplatte 5 lässt sich mit einer Bearbeitungsmaschine vzw. in einer Aufspannung (nicht dargestellt) bearbeiten und bspw. der Auflagetisch 2 mit der Nut 20 versehen. Die Anschlagleisten 19 sind so entlang der Nut 20 verschiebbar. Die Anschlagleisten 19 sind vzw. mit jeweils einer Klemmschraube 21 in der Nut 20 lösbar feststellbar.

Der Auflagetisch 2 weist zwei spitzwinklig auf die Schwenkachse S zulaufende von den Anschlagleisten 19 begrenzte Vorsprünge 22 auf, wobei die Oberseite 3 der Vorsprünge 22 als Werkstückauflageflächen dienen. Die Vorsprünge 22 weisen entsprechend der V-förmigen Aussparung 18 im wesentlichen eine Dreiecksform auf. Die Vorsprünge 22 und damit die Werkstückauflageflächen beim Auflagetisch 2 erstrecken sich im wesentlichen bis zur Schwenkachse S bzw. bis zur teilzylindrischen Öffnung 12. Die V-förmige Aussparung 18 mündet in die teilzylindrische Öffnung 12.

Der Schlitz 17 im Ausleger 16 erstreckt sich vzw. weiter über den Drehteller 15 bis in den Lagervorsprung 11 und vzw. über diesen hinaus wie dies ersichtlich dargestellt ist. Die Schwenkstellung des Lagermittels 4 relativ zum Auflagetisch 2 ist vzw. mit einen Arretiermechanismus lösbar festlegbar. Vom Arretiermechanismus ist hier nur ein Feststellknauf 23 am Ende des Auslegers 16 dargestellt.

Im folgenden darf der Aufbau und die Anordnung der Gleitführungsvorrichtung 9 näher beschrieben werden.

Die Gleitführungsvorrichtung 9 weist mindestens die bereits erwähnte, vzw. blockartige Gleitführung 24 und mindestens eine Führungsstange 25 auf. Hier sind vzw. zwei Führungsstangen 25 vorgesehen. Die Gleitführung 24 ist am Lagermittel 4 vzw. am Drehteller 15 befestigt. Für die Befestigung der Gleitführung 24 mit dem Lagermittel 4 dient insbesondere zunächst der Vorsprung 24a, der plattenähnlich ausgebildet ist und über eine Schraube 13 mit der Aufnahme 14 des Lagermittels 4 verschraubt ist, wobei sich die Schraube 13 innerhalb einer Durchgangsöffnung der Bodenplatte 5 erstreckt und hier drehbar, in der nicht näher bezeichneten Durchgangsöffnung gelagert ist. Insbesondere ist der Drehteller 15 über weitere insgesamt vier nicht näher bezeichnete Schrauben mit dem oberen Bereich der Gleitführung 24 zusätzlich drehfest verbunden, so dass die Gleitvorrichtung 24 auch im wesentlichen über die über der Gleitführung 24 angeordnete Bodenplatte 5 indirekt mit gehalten wird, da die Bodenplatte 5 ja das Lagermittel 4 und damit indirekt nun auch die Gleitführung 24 abstützt bzw. hält. Vzw. zwei Schraubelemente, die zwischen Lagermittel 4 und Gleitführung 24 angeordnet sind, laufen dann in der entsprechenden bogenförmigen Führungsnut 10 während der Verschwenkung des Lagermittels 4 mit bzw. werden hierin geführt während nochmals zwei Schraubelemente randseitig an der Gleitführung 24 angeordnet und mit einem randseitigen Vorsprung des Drehtellers 15 verbunden sind, um die Gleitführung 24 zu lagern.

Die Gleitführung 24 führt die mindestens eine Führungsstange 25 -hier die zwei Führungstangen 25- , wobei die Führungsstangen 25 sich parallel zueinander und parallel zur Gehrungsachse G erstrecken. Die Führungsstangen 25 sind relativ zur Gleitführung 24 innerhalb der Gleitführung 24 verschiebbar angeordnet. Die Gleitführung 24 weist hier zwei an den Querschnitt der Führungsstangen 25 angepasste Führungsstangenaufnahmen (nicht näher bezeichnet) auf. Die beiden Führungsstangen 25 sind an einem Ende mit einem Stangenklemmstück 26 miteinander verbunden. Am anderen Ende der Führungsstangen 25 ist eine Gehrungsarmhalterung 27 angeordnet. Zwischen dem Stangenklemmstück 26 und der Gehrungsarmhalterung 27 umgreift die Gleitführung 24 die beiden Führungsstangen 25.

Der Gehrungsarm 6 ist um die Gehrungsachse G schwenkbar vzw. an der Gehrungsarmhalterung 27 gelagert. Am Gehrungsarm 6 kann an einer Seite ein Gehrungsblech 28 und an einer anderen Seite eine Gegenhaltplatte 29 angeordnet sein, wobei zwischen dem Gehrungsblech 28 und der Gegenhaltplatte 29 die Gehrungsarmhalterung 27 angeordnet ist. Die Gehrungsarmhalterung 27 ist vzw. mit einem Bolzen 30 mit dem Gehrungsblech 28 und der Gegenhaltplatte 29 verbunden, so dass der Gehrungsarm 6 um den Bolzen 30 geschwenkt werden kann. Der Bolzen 30 erstreckt sich hierbei entlang der Gehrungsachse G. Zur Feststellung des Gehrungsarms 6 in einer Schwenkstellung um die Gehrungsachse G weist vzw. das Gehrungsblech 28 eine biegbare Lasche 31 mit einer nicht näher dargestellten Bolzenöffnung auf. Die Gehrungsarmhalterung 27 weist ein bogenförmiges Langloch (nicht dargestellt) auf, wobei durch das Langloch und die Bolzenöffnung der Lasche ein Gehrungseinstellbolzen (nicht dargestellt) durchgreift. In Fig. 5 bspw. ist lediglich ein mit dem Gehrungseinstellbolzen verbundener Hebelgriff 32 dargestellt. Durch ein Betätigen des Hebelgriffs 32 kann die Lasche 31 gegen die Gehrungsarmhalterung 27 gezogen werden, so dass die Lasche 31 den Gehrungsarm 6 relativ zur Gehrungsarmhalterung 27 in einer definierten Schwenkstellung um die Gehrungsachse G festklemmt. Es kann auch eine anders funktionierende Feststelleinrichtung vorgesehen sein, um einen bestimmten Winkel, d. h. Schwenkstellung des Gehrungsarms 6 bzgl. der Gehrungsachse G einzustellen und zu fixieren.

Der Gehrungsarm 6 ist vzw. im wesentlichen L-förmig ausgebildet. Am Gehrungsarm 6 bzw. an der Sägevorrichtung 7 ist vzw. ein Elektromotor zum Antrieb des Sägeblatts 8 angeordnet.

Die Kapp- und Gehrungssäge 1 steht auf einem Basisgestell 33. Das Basisgestell 33 besteht hier im wesentlichen aus zwei Füßen 34. Die stabile Baugruppe aus dem Auflagetisch 2 und der Bodenplatte 5 ist über das Basisgestell 33, insbesondere die beiden Füße 34, am Boden abgestützt. Das Basisgestell 34 ist beweglich am Auflagetisch 2 und/oder der Bodenplatte 5 angeordnet, so dass Unebenheiten des Bodens ausgleichbar sind. Vzw. ist das Basisgestell 33, insbesondere die Füße 34, schwenkbeweglich am Auflagetisch 2 und/oder der Bodenplatte 5 angeordnet. Vzw. sind die Schwenkstellungen der beiden Füße 34 jeweils mit einer Einstellschraube 35 relativ zum Auflagetisch 2 und/oder der Bodenplatte 5 einstellbar.

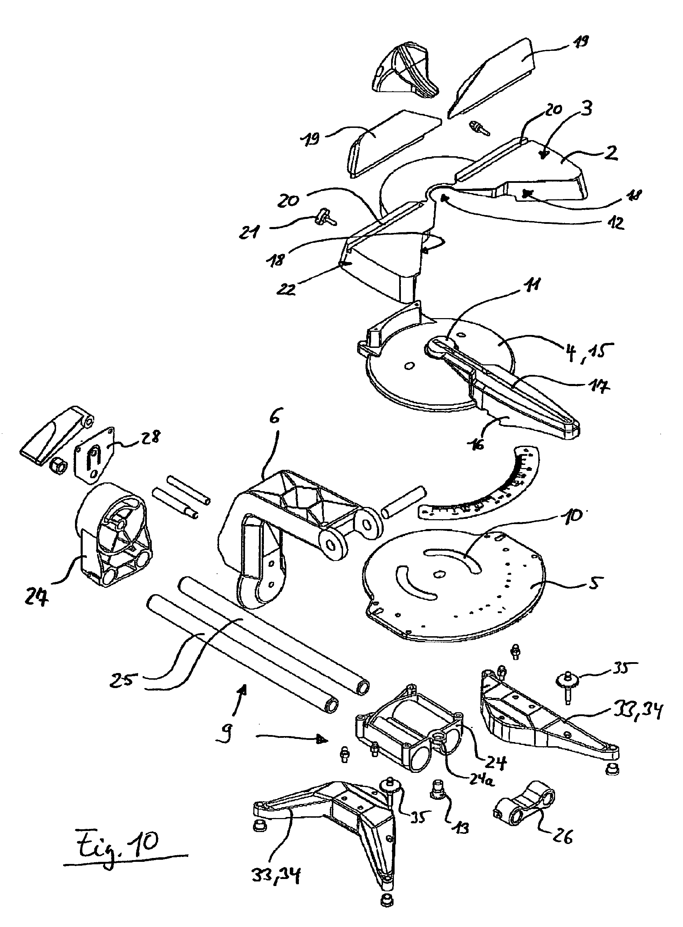

So zeigt Fig. 10 nochmals die wesentlichen Komponenten der erfindungsgemäßen Kapp- und Gehrungssäge 1 in explosiver schematischer Darstellung. Gut zu erkennen ist hier nochmals die Gleitführungsvorrichtung 9 mit den beiden Führungsstangen 25, insbesondere auch der Gleitführung 24 bzw. des Stangenklemmstückes 26 und der Gehrungsarmhalterung 27, die an den jeweiligen Enden der Führungsstangen 25 befestigt werden. Der Aufbau, insbesondere der sequentielle Aufbau der einzelnen Komponenten, also die bereits zuvor genannte "Sandwich-Bauart" ist in Fig. 10 daher nochmals besonders gut erkennbar dargestellt.

Die beschriebenen Nachteile sind daher vermieden und entsprechende Vorteile sind erzielt.

### Bezugszeichenliste:

- 1: Kapp- und Gehrungssäge
- 2: Auflagetisch
- 3: Oberseite
- 4: Lagermittel
- 5: Bodenplatte
- 6: Gehrungsarm
- 7: Sägevorrichtung
- 8: Sägeblatt
- 9: Gleitführungsvorrichtung
- 10: Führungsnut
- 11: Lagervorsprung
- 12: Öffnung
- 13: Schraube
- 14: Aufnahme
- 15: Drehteller
- 16: Ausleger
- 17: Schlitz
- 18: Aussparung
- 19: Anschlagleiste
- 20: Nut
- 21: Klemmschraube
- 22: Vorsprung
- 23: Feststellknauf
- 24: Gleitführung
- 24a: Vorsprung
- 25: Führungsstange
- 26: Stangenklemmstück
- 27: Gehrungsarmhalterung
- 28: Gehrungsblech
- 29: Gegenhaltplatte
- 30: Bolzen
- 31: Lasche
- 32: Hebel
- 33: Basisgestell
- 34: Fuß
- 35: Einstellschraube

- S: Schwenkachse
- G: Gehrungsachse
- P: Pfeile

## Patentansprüche

1. Kapp- und Gehrungssäge (1) mit einem Auflagetisch (2), mit einem relativ zum Auflagetisch (2) um eine Schwenkachse (S) schwenkbaren Lagermittel (4), mit einer Bodenplatte (5), wobei auf der Bodenplatte (5) das Lagermittel (4) schwenkbar abgestützt ist, und mit einem um die Schwenkachse (S) schwenkbaren Gehrungsarm (6) sowie einer am Gehrungsarm (6), vzw. oberhalb des Auflagetisches (2) angeordneten Sägevorrichtung (7), wobei die Sägevorrichtung (7) mittels einer Gleitführungsvorrichtung (9) verschiebbar ist, **dadurch gekennzeichnet, dass** die Gleitführungsvorrichtung (9) im wesentlichen unterhalb der Bodenplatte (5) vorgesehen ist, wobei das Lagermittel (4), die Bodenplatte (5) und die Gleitführungsvorrichtung (9) als getrennte Baugruppen ausgebildet sind, die sequentiell übereinander angeordnet sind und wobei der Auflagetisch (2) das Lagermittel (4) zumindest teilweise überdeckt.

2. Kapp- und Gehrungssäge nach Anspruch 1, **dadurch gekennzeichnet, dass** die Bodenplatte (5) eine bogenförmige Führungsnut (10) aufweist, wobei die Führungsnut (10) konzentrisch zur Schwenkachse (S) angeordnet ist und die Gleitführungsvorrichtung (9) und das Lagermittel (4) durch mindestens ein durch die Führungsnut (10) reichendes Führungselement, insbesondere durch einen Bolzen oder eine Schraube miteinander verbunden sind.

3. Kapp- und Gehrungssäge nach Anspruch 1 oder 2, **dadurch gekennzeichnet, dass** das Lagermittel (4) im Bereich der Schwenkachse (S) einen zumindest teilzylindrischen Lagervorsprung (11) aufweist und der Auflagetisch (2) im Bereich der Schwenkachse (S) eine vzw. zumindest teilzylindrische Öffnung (12) aufweist, wobei der Lagervorsprung (11) vzw. passend in die Öffnung (12) eingreift.

4. Kapp- und Gehrungssäge nach einem der vorstehenden Ansprüche, **dadurch gekennzeichnet, dass** die Oberseite des Lagermittels (4) sich im wesentlichen unterhalb der Oberseite (3) des Auflagetisches (2) erstreckt und/oder dass das Lagermittel (4) einen Drehteller (15) und einen Ausleger (16) mit einem sich parallel zur Gehrungsachse (G) erstreckenden Schlitz (17) aufweist, wobei die Sägevorrichtung (7) mit einem Sägeblatt (8) in den Schlitz (17) eintauchbar ausgestaltet ist und/oder dass der Schlitz (17) sich entlang des Auslegers (16) bis in den Lagervorsprung (11) erstreckt.

5. Kapp- und Gehrungssäge nach einem der vorstehenden Ansprüche, **dadurch gekennzeichnet, dass** der Auflagetisch (2) eine im wesentlichen V-förmige Aussparung (18) aufweist, wobei der Ausleger (16) innerhalb der Aussparung (18) schwenkbar ist und/oder dass die V-förmige Aussparung (18) in die Öffnung (12) mündet.

6. Kapp- und Gehrungssäge nach einem der vorstehenden Ansprüche, **dadurch gekennzeichnet, dass** am Auflagetisch (2) zwei aufragende, fluchtend zueinander ausgerichtete Anschlagleisten (19) zum Anlegen des Werkstücks angeordnet sind.

7. Kapp- und Gehrungssäge nach einem der vorstehenden Ansprüche, **dadurch gekennzeichnet, dass** der Auflagetisch (2) zwei spitzwinklig auf die Schwenkachse (S) zulaufende, von den Anschlagleisten (19) begrenzte Vorsprünge (22) aufweist, deren Oberseiten (3) als Werkstückauflageflächen dienen und/oder dass die Vorsprünge (22) des Auflagetisches (20) sich im wesentlichen bis zur Schwenkachse (S) erstrecken.

8. Kapp- und Gehrungssäge nach einem der vorstehenden Ansprüche, **dadurch gekennzeichnet, dass** eine Schwenkstellung des Lagermittels (4) relativ zum Auflagetisch (2) mit einem Arretiermechanismus lösbar festlegbar ist.

9. Kapp- und Gehrungssäge nach einem der vorstehenden Ansprüche, **dadurch gekennzeichnet, dass** die Gleitführungsvorrichtung (9) mindestens eine Gleitführung (24) und mindestens eine Führungsstange (25) aufweist, wobei die Gleitführung (24) am Lagermittel (4), insbesondere am Drehteller (15) angeordnet ist und die Führungsstange (25) durch die Gleitführung (24) parallel zur Gehrungsachse (G) verschiebbar sind.

10. Kapp- und Gehrungssäge nach einem der vorstehenden Ansprüche, **dadurch gekennzeichnet, dass** zwei Führungstangen (25) vorgesehen sind und die Führungsstangen (25) an einem Ende mit einen Stangenklemmstück (26) miteinander verbunden sind und am anderen Ende der Führungsstangen (25) eine Gehrungsarmhalterung (27) angeordnet ist.

11. Kapp- und Gehrungssäge nach einem der vorstehenden Ansprüche, **dadurch gekennzeichnet, dass** der Gehrungsarm (6) um die Gehrungsachse (G) schwenkbar vzw. an der Gehrungsarmhaltung (27) drehbar gelagert ist und/oder dass der Gehrungsarm (6) im wesentlichen L-förmig ausgebildet ist.

12. Kapp- und Gehrungssäge nach einem der vorstehenden Ansprüche, **dadurch gekennzeichnet, dass** am Gehrungsarm (6) einerseits ein Gehrungsblech (28) und andererseits eine Gegenhaltplatte (29) angeordnet ist, wobei zwischen dem Gehrungsblech (28) und der Gegenhaltplatte (29) die Gehrungsarmhalterung (27) angeordnet ist und/oder dass das Gehrungsblech (28) eine biegbare Lasche (31) mit einer Bolzenöffnung aufweist und die Gehrungsarmhalterung (27) ein bogenförmiges Langloch aufweist, wobei durch das Langloch und die Bolzenöffnung ein Gehrungseinstellbolzen durchgreift.

13. Kapp- und Gehrungssäge nach einem der vorstehenden Ansprüche, **dadurch gekennzeichnet, dass** am Gehrungsarm (6) die Sägevorrichtung (7) schwenkbar gelagert ist.

14. Kapp- und Gehrungssäge nach einem der vorstehenden Ansprüche, **dadurch gekennzeichnet, dass** der Auflagetisch (2) für die Anschlagleisten (19) eine Nut (20) aufweist, wobei die Anschlagleisten (19) in die Nut (20) eingreifen.

15. Kapp- und Gehrungssäge nach einem der vorstehenden Ansprüche, **dadurch gekennzeichnet, dass** am Auflagetisch (2) und/oder an der Bodenplatte (5) ein Basisgestell (33), insbesondere mehrere Füße (34), schwenkbeweglich verstellbar angeordnet ist/sind, so dass Unebenheiten des Bodens ausgleichbar sind und/oder dass die Relativstellung der Füße (34) zum Auflagetisch (2) und/oder zur Bodenplatte (5) mit jeweils einer Einstellschraube (35) einstellbar ist.

## Claims

1. Docking and miter saw (1) having a seating table (2), having a bearing means (4) that can be pivoted about a pivot axis (S) relative to the seating table (2), having a base plate (5), wherein the bearing means (4) is pivotally supported on the base plate (5), and having a miter arm (6) that can be pivoted about the pivot axis (S), and a sawing device (7) disposed on the miter arm (6), preferably above the seating table (2), the sawing device (7) being displaceable by means of a sliding guide device (9), **characterized in that** the sliding guide device (9) is provided substantially below the base plate (5), wherein the bearing means (4), the base plate (5) and the sliding guide device (9) are realized as separate assemblies, which are disposed sequentially over one another, and wherein the seating table (2) at least partially covers the bearing means (4).

2. Docking and miter saw according to Claim 1, **characterized in that** the base plate (5) has an arcuate guide slot (10), the guide slot (10) being disposed concentrically in relation to the pivot axis (S), and the sliding guide device (9) and the bearing means (4) being connected to on another by at least one guide element, in particular by a bolt or a screw, extending through the guide slot (10).

3. Docking and miter saw according to Claim 1 or 2, **characterized in that** the bearing means (4) has an at least partially cylindrical bearing projection (11) in the region of the pivot axis (S), and the seating table (2) has an at least partially cylindrical opening (12) in the region of the pivot axis (S), the bearing projection (11) preferably engaging in the opening (12) in a fitting manner.

4. Docking and miter saw according to any one of the preceding claims, **characterized in that** the top side of the bearing means (4) extends substantially below the top side (3) of the seating table (2), and/or **in that** the bearing means (4) has a rotary disk (15) and a side arm (16) that has a groove (17) extending parallelwise in relation to the miter axis (G), the sawing device (7) being designed such that it can be inserted, with a saw blade (8), into the groove (17), and/or **in that** the groove (17) extends long the side arm (16) as far as into the bearing projection (11).

5. Docking and miter saw according to any one of the preceding claims, **characterized in that** the seating table (2) has a substantially V-shaped recess (18), the side arm (16) being pivotable within the recess (18), and/or **in that** the V-shaped recess (18) opens into the opening (12).

6. Docking and miter saw according to any one of the preceding claims, **characterized in that** two upwardly projecting stop strips (19) in alignment with one another are disposed on the seating table (2) for the purpose of placement of the workpiece.

7. Docking and miter saw according to any one of the preceding claims, **characterized in that** the seating table (2) has two projections (22), which taper towards the pivot axis (S) at an acute angle and which are delimited by the stop strips (19), the top sides (3) of which projections serve as workpiece seating surfaces, and/or **in that** the projections (22) of the seating table (2) extend substantially as far as the pivot axis (S).

8. Docking and miter saw according to any one of the preceding claims, **characterized in that** a pivot position of the bearing means (4) relative to the seating table (2) can be detachably fixed by means of a locking mechanism.

9. Docking and miter saw according to any one of the preceding claims, **characterized in that** the sliding guide device (9) has at least one sliding guide (24) and at least one guide rod (25), the sliding guide (24) being disposed on the bearing means (4), in particular on the rotary disk (15),and the guide rod (25) being displaceable through the sliding guide (24), parallelwise in relation to the miter axis (G).

10. Docking and miter saw according to any one of the preceding claims, **characterized in that** two guide rods (25) are provided, and the guide rods (25) are connected to one another at one end by a rod clamping piece (26), and a miter-arm mount (27) is disposed at the other end of the guide rods (25).

11. Docking and miter saw according to any one of the preceding claims, **characterized in that** the miter arm (6) is preferably rotatably mounted on the miter-arm mount (27) so as to be pivotable about the miter axis (G), and/or **in that** the miter arm (6) is realized substantially in an L shape.

12. Docking and miter saw according to any one of the preceding claims, **characterized in that,** on the miter arm (6), a miter plate (28) is disposed on one side and a counter-plate (29) is disposed on the other side, the miter-arm mount (27) being disposed between the miter plate (28) and the counter-plate (29) and/or **in that** the miter plate (28) has a flexible joint piece (31) having a bolt opening, and the miter-arm mount (27) has an arcuate, elongate hole, a miter setting bolt engaging through the elongate hole and the bolt opening.

13. Docking and miter saw according to any one of the preceding claims, **characterized in that** the sawing device (7) is pivotally mounted on the miter arm (6).

14. Docking and miter saw according to any one of the preceding claims, **characterized in that** the seating table (2) has a slot (20) for the stop strip (19), the stop strips (19) engaging in the slot (20).

15. Docking and miter saw according to any one of the preceding claims, **characterized in that** a base frame (33), in particular a plurality of feet (34), is/are disposed so as to be pivotally adjustable on the seating table (2) and/or on the base plate (5), such that irregularities of the ground can be compensated, and/or **in that** the relative position of the feet (34) in relation to the seating table (2) and/or to the base plate (5) can be set by means of a respective setting screw (35).

## Revendications

1. Scie à onglet et radiale (1) comprenant une table d'appui (2), un moyen de palier (4) pouvant pivoter par rapport à la table d'appui (2) autour d'un axe de pivotement (S), une plaque de fond (5), le moyen de palier (4) étant supporté de manière à pouvoir pivoter sur la plaque de fond (5), et un bras d'onglet (6) pouvant pivoter autour de l'axe de pivotement (S) ainsi qu'un dispositif de scie (7) disposé sur le bras d'onglet (6), de préférence au-dessus de la table d'appui (2), le dispositif de scie (7) pouvant être déplacé au moyen d'un dispositif de guidage coulissant (9), **caractérisée en ce que** le dispositif de guidage coulissant (9) est prévu essentiellement en dessous de la plaque de fond (5), le moyen de palier (4), la plaque de fond (5) et le dispositif de guidage coulissant (9) étant réalisés sous forme de modules séparés qui sont disposés séquentiellement les uns au-dessus des autres et la table d'appui (2) recouvrant au moins en partie le moyen de palier (4).

2. Scie à onglet et radiale selon la revendication 1, **caractérisée en ce que** la plaque de fond (5) présente une rainure de guidage de forme courbe (10), la rainure de guidage (10) étant disposée concentriquement par rapport à l'axe de pivotement (S) et le dispositif de guidage coulissant (9) et le moyen de palier (4) étant connectés l'un à l'autre par au moins un élément de guidage s'étendant à travers la rainure de guidage (10), en particulier par un boulon ou une vis.

3. Scie à onglet et radiale selon la revendication 1 ou 2, **caractérisée en ce que** le moyen de palier (4) présente dans la région de l'axe de pivotement (S) une saillie de palier (11) au moins en partie cylindrique et la table d'appui (2) présente, dans la région de l'axe de pivotement (S), une ouverture (12) de préférence au moins en partie cylindrique, la saillie de palier (11) venant en prise de préférence avec ajustement dans l'ouverture (12).

4. Scie à onglet et radiale selon l'une quelconque des revendications précédentes, **caractérisée en ce que** le côté supérieur du moyen de palier (4) s'étend essentiellement en dessous du côté supérieur (3) de la table d'appui (2) et/ou **en ce que** le moyen de palier (4) présente un plateau tournant (15) et un bras en porte-à-faux (16) avec une fente (17) s'étendant parallèlement à l'axe d'onglet (G), le dispositif de scie (7) étant réalisé de manière à pouvoir s'enfoncer dans la fente (17) avec une lame de scie (8), et/ou **en ce que** la fente (17) s'étend le long du bras en porte-à-faux (16) jusque dans la saillie de palier (11).

5. Scie à onglet et radiale selon l'une quelconque des revendications précédentes, **caractérisée en ce que** la table d'appui (2) présente un évidement (18) essentiellement en forme de V, le bras en porte-à-faux (16) pouvant pivoter à l'intérieur de l'évidement (18), et/ou **en ce que** l'évidement en forme de V (18) débouche dans l'ouverture (12).

6. Scie à onglet et radiale selon l'une quelconque des revendications précédentes, **caractérisée en ce que** sur la table d'appui (2) sont disposées deux baguettes de butée (19) dressées, orientées en affleurement l'une avec l'autre, pour l'application de la pièce.

7. Scie à onglet et radiale selon l'une quelconque des revendications précédentes, **caractérisée en ce que** la table d'appui (2) présente deux saillies (22) convergeant à angle aigu vers l'axe de pivotement (S), limitées par les baguettes de butée (19), dont les côtés supérieurs (3) servent de surfaces d'appui de pièces, et/ou **en ce que** les saillies (22) de la table d'appui (2) s'étendent essentiellement jusqu'à l'axe de pivotement (S).

8. Scie à onglet et radiale selon l'une quelconque des revendications précédentes, **caractérisée en ce qu'**une position de pivotement du moyen de palier (4) par rapport à la table d'appui (2) peut être fixée de manière amovible au moyen d'un mécanisme de blocage .

9. Scie à onglet et radiale selon l'une quelconque des revendications précédentes, **caractérisée en ce que** le dispositif de guidage coulissant (9) présente au moins un guide coulissant (24) et au moins une tige de guidage (25), le guide coulissant (24) étant disposé sur le moyen de palier (4), en particulier sur le plateau tournant (15), et la tige de guidage (25) pouvant être déplacée par le guide coulissant (24) parallèlement à l'axe d'onglet (G).

10. Scie à onglet et radiale selon l'une quelconque des revendications précédentes, **caractérisée en ce que** deux tiges de guidage (25) sont prévues et les tiges de guidage (25) sont connectées l'une à l'autre au niveau d'une extrémité par une pièce de serrage de tige (26) et une fixation de bras d'onglet (27) est disposée au niveau de l'autre extrémité des tiges de guidage (25).

11. Scie à onglet et radiale selon l'une quelconque des revendications précédentes, **caractérisée en ce que** le bras d'onglet (6) est supporté de manière à pouvoir pivoter autour de l'axe d'onglet (G), de préférence de manière à pouvoir tourner sur la fixation de bras d'onglet (27), et/ou **en ce que** le bras d'onglet (6) est réalisé essentiellement en forme de L.

12. Scie à onglet et radiale selon l'une quelconque des revendications précédentes, **caractérisée en ce que** d'une part une tôle d'onglet (28) et d'autre part une plaque de fixation conjuguée (29) sont disposées sur le bras d'onglet (6), la fixation de bras d'onglet (27) étant disposée entre la tôle d'onglet (28) et la plaque de fixation conjuguée (29), et/ou **en ce que** la tôle d'onglet (28) présente une patte flexible (31) avec une ouverture de boulon et la fixation de bras d'onglet (27) présente un trou oblong de forme courbe, un boulon d'ajustement d'onglet venant en prise à travers le trou oblong et l'ouverture de boulon.

13. Scie à onglet et radiale selon l'une quelconque des revendications précédentes, **caractérisée en ce que** le dispositif de scie (7) est supporté de manière à pouvoir pivoter sur le bras d'onglet (6).

14. Scie à onglet et radiale selon l'une quelconque des revendications précédentes, **caractérisée en ce que** la table d'appui (2) présente une rainure (20) pour les baguettes de butée (19), les baguettes de butée (19) venant en prise dans la rainure (20).

15. Scie à onglet et radiale selon l'une quelconque des revendications précédentes, **caractérisée en ce qu'**un bâti de base (33), en particulier plusieurs pieds (34), est/sont disposés de manière réglable par mouvement pivotant sur la table d'appui (2) et/ou sur la plaque de fond (5), de telle sorte que des inégalités du sol puissent être compensées et/ou que la position relative des pieds (34) puisse être ajustée par rapport à la table d'appui (2) et/ou à la plaque de fond (5) avec une vis d'ajustement respective (35).
